# EUROPÄISCHE PATENTSCHRIFT

(11) **EP 1 331 163 B1**
(45) Veröffentlichungstag und Bekanntmachung des Hinweises auf die Patenterteilung: **07.06.2006**
(21) Anmeldenummer: 02027888.3
(22) Anmeldetag: 13.12.2002
(51) Int. Cl.: B62D 29/04, B62D 25/08, B60K 5/12, B62D 21/11

(54) **Aufbau für Kraftfahrzeuge mit Tragstruktur aus hochfestem Kunststoff**
Car body with support frame of high-strength synthetic material
Carrosserie automobile avec structure portante en matériau synthétique rigide

(30) Priorität: 26.01.2002 DE 10202985
(43) Veröffentlichungstag der Anmeldung: 30.07.2003
(73) Patentinhaber: Dr.Ing. h.c.F. Porsche Aktiengesellschaft, 70435 Stuttgart (DE)
(72) Erfinder: Stoffels, Oliver, 71634 Ludwigsburg (DE); Meier, Thomas, 76287 Rheinstetten (DE); Steinhauser, Dieter, 73630 Remshalden (DE)

(56) Entgegenhaltungen:
- EP-A- 0 295 662
- EP-A- 0 372 987
- EP-A- 0 523 831
- EP-A- 0 594 131
- DE-A- 3 927 485
- DE-A- 4 330 044
- DE-A- 19 860 794
- DE-C- 767 115
- DE-C- 3 932 196
- GB-A- 503 514
- GB-A- 2 317 858
- US-A- 4 216 839
- US-A- 4 422 685
- US-A- 4 573 707
- US-A- 5 960 901
- US-A- 6 003 935

## Beschreibung

Die Erfindung bezieht sich auf einen Aufbau für Kraftfahrzeuge, insbesondere Personenwagen.

Ein bekanntes Kraftfahrzeug, FR 940 982, umfasst einen Aufbau mit einer Fahrgastraumstruktur, die von einer vorderen Tragstruktur und einer hinteren Tragstruktur begrenzt ist. Beide Tragstrukturen werden durch metallische Gitterrohrrahmen gebildet, wobei eine der beiden Tragstrukturen ein Antriebsaggregat aufnimmt. Von der Fahrgastraumstruktur sind lageraugenartige Verlängerungen weggeführt, die von Lagergabeln, angebracht an Rohrträgern der Tragstrukturen, umgriffen werden. Zur Befestigung der Tragstrukturen an der Fahrgastraumstruktur dienen Haltemittel.

Die EP 0 295 661 A2 befasst sich mit einer hinteren Tragstruktur, die unter Vermittlung nachgiebiger Elemente mit einer Fahrgastraumstruktur verbunden ist. Die besagte Tragstruktur wird durch eine Rohrrahmenkonstruktion gebildet, umfassend obere und untere Längsträger bzw. Querträger und zwischen letzteren verlaufende Stützträger. Darüber hinaus sind an dieser Rohrahmenkonstruktion Vorkehrungen getroffen, um ein Antriebsaggregat und Radaufhängungsglieder aufzunehmen.

Aus der Zeitschrift IT Quattroroute 45 (2000) 531 (Januar) Seite 138 geht ein Personenwagen der Hochleistungskategorie hervor, der einen Aufbau mit einer zweisitzigen Fahrgastraumstruktur aufweist. Diese Fahrgastraumstruktur besteht aus einem hochfesten Kunststoff und ist mit einem Antriebsaggregat direkt d.h. ohne Zwischenschaltung einer Tragstruktur verblockt. Das Antriebsaggregat ist zwischen den Radachsen, jedoch benachbart der Hinterachse - Mittelmotor-Anordnung - in den Personenwagen eingebaut.

Die GB-A-2317858 zeigt eine aus hochfestem Kunststoff bestehende Aufbaustruktur für Kraftfahrzeuge, die in Spaceframebauweise gefertigt ist, das heißt, der tragende Rahmen des Aufbaus besteht bei dieser Konstruktion aus einer Vielzahl von in geeigneter Weise miteinander verbundener Hohlprofile.

Bei der GB-A-2317858 setzt sich die Aufbaustruktur aus mehreren Modulen zusammen, wobei die beiden endseitigen Module jeweils über kombinierte Steck- und Klebeverbindungen mit einem dazwischenliegenden Fahrgastraummodul verbunden sind. Jedes endseitige Modul umfasst zwei - in der Seitenansicht gesehen - U-förmig ausgebildete Rahmenteile, die über einen unteren plattenförmigen Abschnitt miteinander verbunden sind.

Aufgabe der Erfindung ist es, einen Aufbau für ein Kraftfahrzeug mit einer Fahrgastraumstruktur zu schaffen, die mit einer ein Antriebsaggregat aufnehmenden Tragstruktur auf einfache Weise verbindbar ist. Dabei sollte aber auch sichergestellt sein, dass die Tragstruktur bei geringem Gewicht sich durch eine hohe Festigkeit auszeichnet und sich räumlich vorteilhaft in das Kraftfahrzeug integrieren lässt.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Tragvorrichtung des Aufbaus als eine im Querschnitt etwa rohrförmig gestaltete Hüllvorrichtung des Antriebsaggregats, umfassend eine Brennkraftmaschine, Kupplung und Getriebe, ausgebildet und fest mit einer Fahrgastraumstruktur verbunden ist. An der mit Trägern versteifte Hüllvorrichtung, die ohne Bauraum beanspruchende Verstrebungen auskommt, ist das Antriebsaggregat funktionsgerecht gehalten und, weil aus hochfestem insbesondere glasfaserverstärktem Kunststoff- CFK - bestehend, weist sie ein geringes Gewicht und eine überragende Torsions- und Biegefestigkeit auf. Darüber hinaus umgibt die Hüllvorrichtung im wesentlichen allseitig Außenkonturen des Antriebsaggregats, das über Durchgangsöffnungen in der Hüllvorrichtung zugänglich ist und an Lageraufnahmen von ihr in Lage gehalten wird. Diese Lageraufnahmen sind leicht in die Hüllvorrichtung zu integrieren. Dass die Hüllvorrichtung aus einem Oberteil und einem Unterteil besteht erleichtert zum einen ihre Herstellung und zum anderen wird das Aus- und auch das Einbauen des Antriebsaggregats erleichtert. Schließlich besteht die Möglichkeit das Antriebsaggregat und die Hüllvorrichtung als vorgefertigtes Modul mit der Fahrgastraumstruktur zu verbinden.

In der Zeichnung wird ein Ausführungsbeispiel der Erfindung gezeigt, das nachstehend näher beschrieben ist.

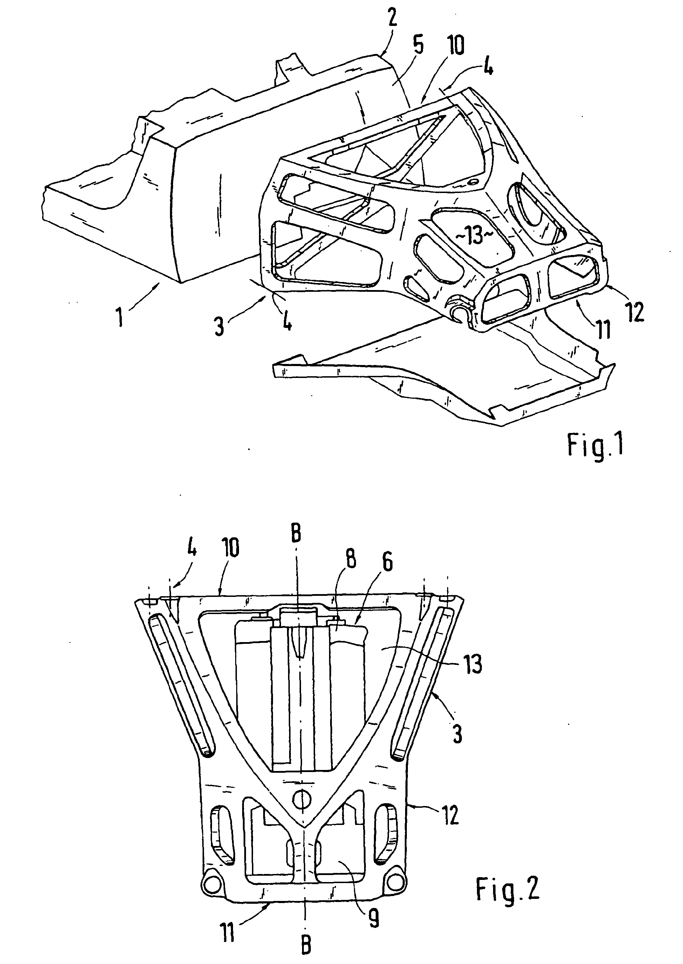

Es zeigen
- Fig. 1: eine Schrägansicht eines schematisch dargestellten Aufbaus eines Kraftfahrzeugs, und zwar mit einer Fahrgastraumstruktur und einer Tragstruktur,
- Fig. 2: eine Ansicht von oben auf die Tragstruktur mit einem darin schematisch angedeuteten Antriebsaggregat,
- Fig. 3: eine Ansicht entsprechend Fig. 2, jedoch ohne Anntriebsaggregat,
- Fig. 4: eine Schrägansicht auf die Tragstruktur von hinten links und oben,
- Fig. 5: einen Schnitt nach der Linie V-V der Fig. 3,
- Fig. 6: eine Ansicht schräg von oben auf eine Schließwand der Tragstruktur,
- Fig. 7: einen Schnitt nach der Linie VII-VII der Fig. 6,

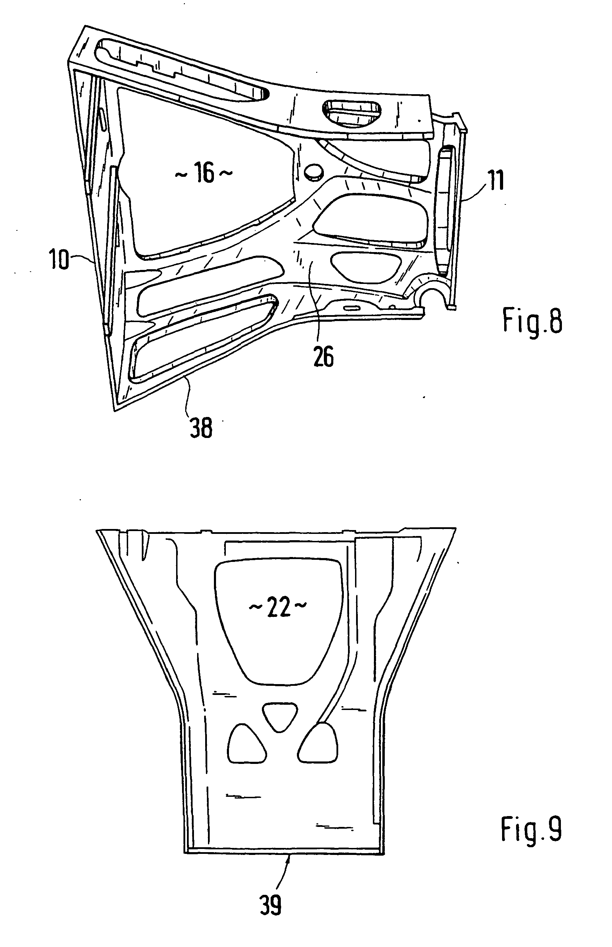

- Fig. 8: eine Schrägansicht von unten auf ein Oberteil der Tragstruktur,
- Fig. 9: eine Ansicht von oben auf ein Unterteil der Tragstruktur,
- Fig. 10: eine Teilansicht der Tragstruktur mit Radaufhängungsgliedern,
- Fig. 11: einen Schnitt etwa nach der Linie XI-XI der Fig. 9,
- Fig. 12: einen Schnitt nach der Linie XII-XII der Fig.10,
- Fig. 13: eine Schrägansicht von hinten auf einen Endbereich der Tragstruktur.

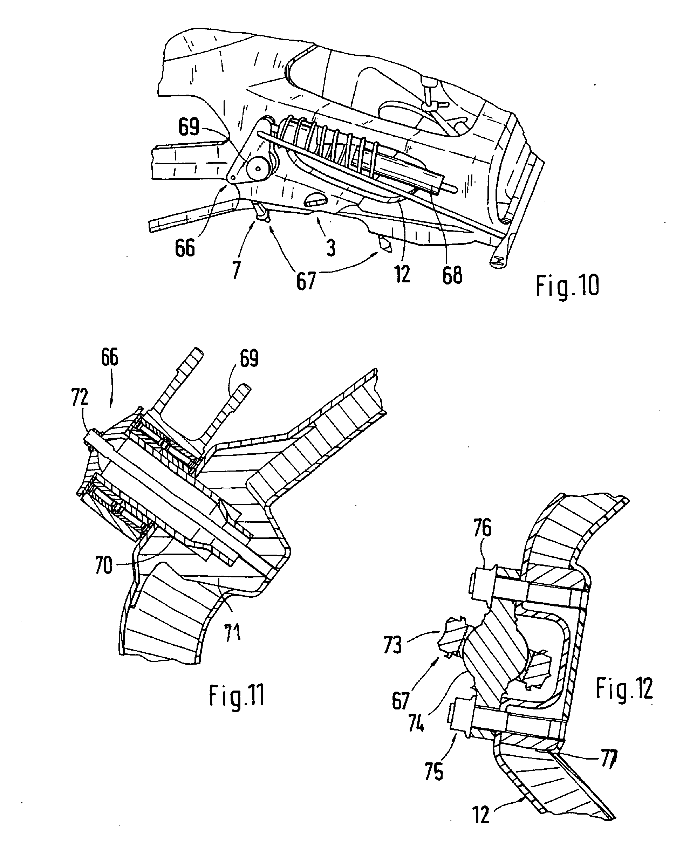

Von einem Kraftfahrzeug bzw. Personenkraftwagen der Hochleistungskategorie ist lediglich ein Aufbau 1 dargestellt, der eine beispielsweise aus hochfestem Kunststoff bestehende Fahrgastraumstruktur 2 und einer Tragstruktur 3 umfasst. Die Tragstruktur 3 ist unter Vermittlung von bspw. als Schrauben 4 ausgebildeten Halteelementen an eine hintere Querwand 5 der Fahrgastraumstruktur 2 angeschlossenen und dient zur Aufnahme eines Antriebsaggregats 6 und Radaufhängungsgliedern 7 - Fig.10 - . Das Antriebsaggregat 6 wird durch eine Brennkraftmaschine 8, eine Kupplung und eine Getriebe 9 gebildet, wobei sich die Brennkraftmaschine 8 zwischen Radachsen des Kraftfahrzeugs, jedoch benachbart einer Hinterachse - Mittelmotor-Anordnung - erstreckt.

Die Tragstruktur 3 erstreckt sich - in Fahrzeuglängsrichtung A-A gesehen - zwischen einem benachbart der Querwand 5 der Fahrgastraumstruktur 2 verlaufenden Anschlussbereich 10 und einem hinteren einem Heck des Kraftfahrzeugs zugekehrten Endbereich 11 und ist als Hüllvorrichtung 12 gestaltet, die in einem Innenraum 13 Antriebsaggregats 6 im wesentlichten allseitig umgibt. Die Hüllvorrichtung 12, die Zugang zum Antriebsaggregat 6 bildende Durchgangsöffnungen 14,15,16,17,18,19,20,21,22 und 23 aufweist und in ihrem Innenraum 13 frei von Quer- und Längsstreben ist, ist aus hochfestem insbesondere glasfaserverstärktem Kunststoff - CFK - hergestellt und mit einer Trägervorrichtung 24 versteift. Die Trägervorrichtung 24 ist mit Querträgern 25,26 und 27 und Längsträgern 28,29,30,31,32,33 und 34 ausgestattet. Die Querträger 25 und 27 verlaufen benachbart dem Anschlussbereich 10 bzw. dem Endbereich 11; der Querträger 26 erstreckt sich in einem mittleren Bereich der Hüllvorrichtung 12, und er ist in Fahrzeuglängsrichtung A-A gesehen zwischen den Querträgern 25 und 27 angeordnet. Der Verlauf und die Dimensionierung der Querträger sowie der Längsträger der Trägervorrichtung 24 werden zum einen von den Abmessungen des Antriebsaggregats 6 und zum anderen von den statischen und dynamischen Belastungen bestimmt, die auf die Hüllvorrichtung 12 einwirken, wobei für ihre konstruktive Gestaltung der Einsatz iterativer und rechnerischer Maßnahmen geeignet ist.

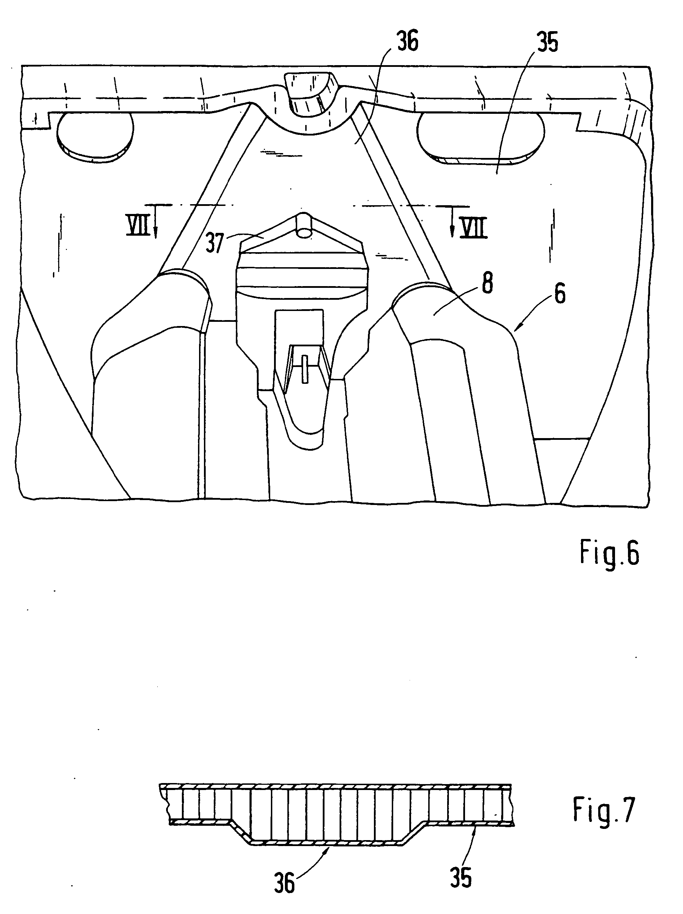

Im Anschlussbereich 10 weist die Hüllvorrichtung 12 eine Schließwand 35 auf, die sich im wesentlichen über die gesamte Höhe Hg und die gesamte Breite Bg der besagten Hüllvorrichtung erstreckt und bspw. als CFK Teil in letztere integriert ist. Die Schließwand 35 ist mit einer örtlichen Querschnittserweiterung 36 Lageraufnahme eines ersten Aufhängungslagers 37 des Antriebsaggregats 6 versehen - Fig. 6 - . Diese Querschnittserweiterung 36 ist eine in Richtung Antriebsaggregat 6 hin ausgeformte Verdickung, erstreckt sich über die gesamte Höhe Hg der Schließwand 35 und besitzt eine auf den Kopf gestellte V-Form.

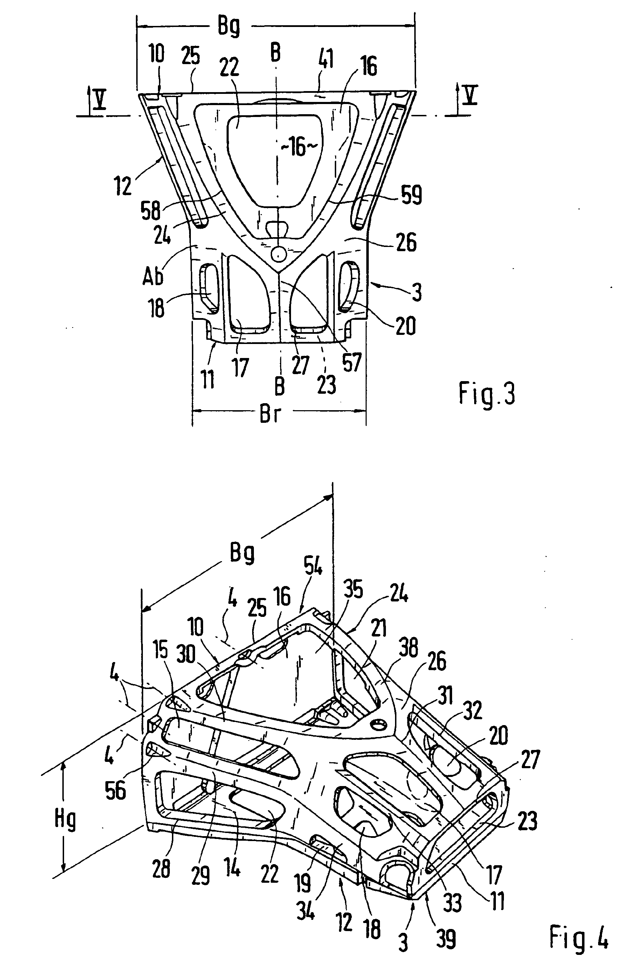

Aus Fig. 3 ist ersichtlich, dass - von oben auf das Kraftfahrzeug gesehen - die Hüllvorrichtung 12 sich zwischen dem Anschlussbereich 10 und dem hinteren Endbereich 11 von einer ersten Breite Be (= gesamte Breite Bg) aus zu einer zweiten reduzierten Breite Br hin verjüngt. Dabei beginnt die zweite reduzierte Breite Br etwa in einem mittleren Abschnitt Ab zwischen dem Anschlussbereich 10 und dem Endbereich 11 der symmetrisch zu einer Fahrzeuglängsmittelebene B-B ausgebildeten Hüllvorrichtung 12, und zwar etwa dort, wo auch der sie versteifende Querträger 26 verläuft; und die reduzierte Breite Br bleibt bis zum hinteren Endbereich 11 konstant.

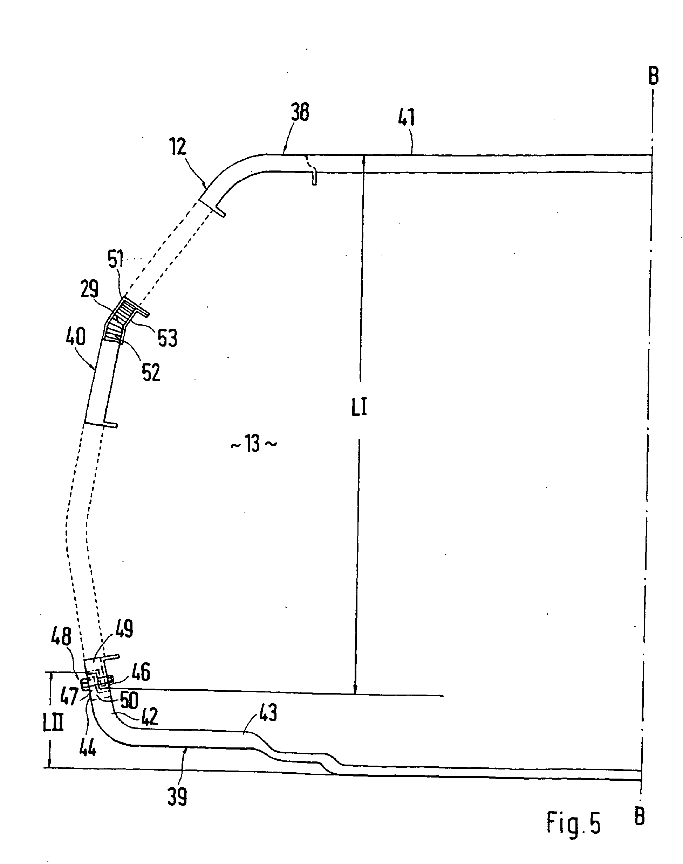

Die Hüllvorrichtung 12 wird durch ein Oberteil 38 und ein Unterteil 39 gebildet - Fig. 5 -. Das Oberteil 38 weist seitliche, aufrechte Hüllabschnitte 40 und einen horizontal ausgerichteten Hüllabschnitt 41 auf; das Unterteil 39 aufrechte Hüllabschnitte 42 und einen horizontalen Hüllabschnitt 43. Die Länge LI der Hüllabschnitte 40 des Oberteils 38 ist größer als die Länge LII der Hüllabschnitte 42 des Unterteils 39, und erste bzw. zweite freie, einander zugekehrte Enden 44 bzw. 45 der Hüllabschnitte 40 bzw. 42 wirken zusammen. Hierzu sind die freien Enden 44 und 45 mit Stufen 46 bzw. 47 versehen, an denen diese Enden zusammengesetzt sind, dergestalt, dass sich abgesetzte Verbindungen ergeben. Im Bereich der abgesetzten Verbindungen sind das Oberteil 38 und das Unterteil 39 unter Vermittlung von Schrauben 48 miteinander verbunden, und die Stufen 46,47 sind mit in die Hüllabschnitte 40,42 eingebrachten metallischen Einsätze 49,50 versehen. In dem Oberteil 38 bzw. in einem der Hüllabschnitte 40 ist der Längsträger 29 integriert, der den prinzipiellen Aufbau Trägervorrichtung 24 wiedergibt. Danach umfasst dieser Längsträger im Querschnitt eine CFK Außenschale 51, eine Wabenstruktur 52 und eine Innenschale 53, die zu einer hochfesten Struktur verarbeitet sind.

Die Hüllvorrichtung 12 ist mit den Schrauben 4 an der Fahrgastraumstruktur 2 gehalten - Fig. 4 -. Dazu sind z.B. entlang des äußeren Umfangs 54 des Querträgers 25 z.B. erste konsolenartige Laschen 55 und zweite konsolenartige Laschen 56 vorgesehen; die Laschen 55 werden durch örtliche Erweiterungen und die Laschen 56 durch Einformungen in dem Querträger gebildet. Nach Fig. 3 weist die Hüllvorrichtung 12 - von oben gesehen - am horizontalen Abschnitt 41 die Durchgangsöffnung 16 auf, die so bemessen ist, dass Gehäuse des Antriebsaggregats 6 zur Erzielung ästhetischer Effekte sichtbar bzw. zur Durchführung von Wartungsarbeiten zugänglich sind. Die Durchgangsöffnung 16 weist annähernd die Form eines wappenähnlichen, gleichschenkeligen Dreiecks auf, dessen Spitze 57 benachbart dem hinteren Endbereich 11 liegt. Die von dieser Spitze 57 weggeführten die Durchgangsöffnung 16 begrenzenden Schenkel 58,59 besitzen einen nach außen gerichteten Verlauf.

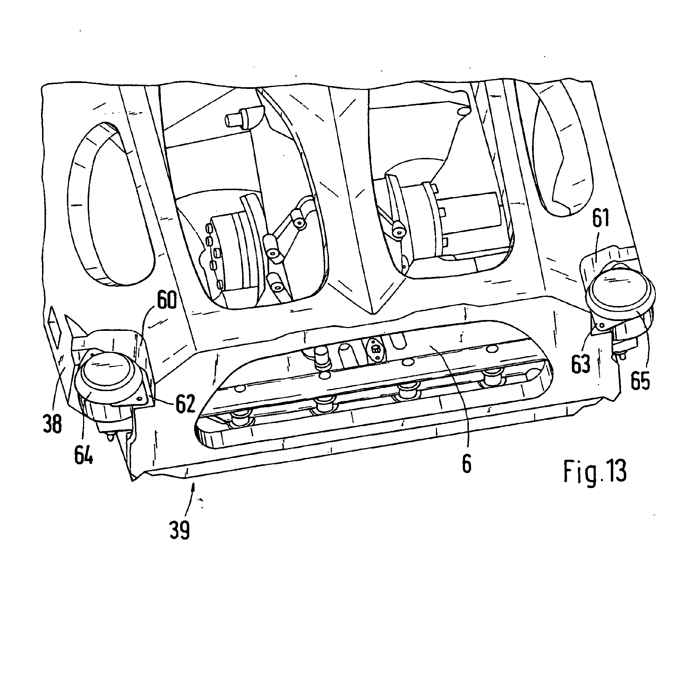

An den Längsseiten der Hüllvorrichtung 12, und zwar benachbart dem hintere Endbereich 11 sind Einformungen 60,61 vorgesehen - Fig. 13 -, die mit Lageraufnahmen bildende Stützkonsolen 62,63 versehen sind. An den Stützkonsolen 62,63 sind Lager 64,65 des Antriebsaggregats 6 befestigt.

Schließlich wird in Fig. 10 gezeigt, dass die Hüllvorrichtung 12 integrierte Lageraufnahmen für Radaufhängungsglieder 66 und 67 umfasst. So handelt es sich bei dem Radaufhängungsglied 66 um eine Feder-Dämpfer-Einheit 68, die mittels eines Schwenkhebels 69 in der Hüllvorrichtung 12 gelagert ist. Der Schwenkhebel 69 ist an einem Lagerzapfen 70 gehalten, der in einem metallischen Einsatz 71 der Hüllvorrichtung 12 mittels einer Befestigungsschraube 72 gehalten ist. Dagegen ist das Radaufhängungsglied 67 eine Querlenker 73, der schwenkbeweglich mit einem Tragzapfen 74 zusammenwirkt. Der Tragzapfen 74 ist mittels Schrauben 75,76 an metallische Einsätze 77 der Hüllvorrichtung 12 gehalten.

## Patentansprüche

1. Aufbau (1) für Kraftfahrzeuge, insbesondere Personenkraftwagen, mit einer Fahrgastraumstruktur (2) aus hochfestem Kunststoff und wenigstens einer daran anschließenden Tragstruktur (3) aus hochfestem Kunststoff zur Aufnahme eines Antriebsaggregats (6) und von Radaufhängungsgliedern, wobei die einen Anschlussbereich (10) an die Fahrgastraumstruktur (2) und einen hinteren Endbereich (11) aufweisende Tragstruktur (3) unter Vermittlung von Halteelementen (4) mit der Fahrgastraumstruktur (2) verbunden ist, wobei die Tragstruktur (3) durch eine etwa rohrförmige, sich in Fahrzeuglängsrichtung (A-A) erstreckende räumliche Hüllvorrichtung (12) gebildet wird, die das Antriebsaggregat (6) im wesentlichen allseitig umgibt, wobei die rohrartige Hüllvorrichtung (12) eine versteifende Trägervorrichtung (24), mehrere seitliche, sowie obere und untere, den Zugang zum Antriebsaggregat (6) gewährende Durchgangsöffnungen (14 bis 23) und in die Hüllvorrichtung (12) integrierte Lageraufnahmen (36, 62, 63, 71, 77) für das Antriebsaggregat (6) und die Radaufhängungsglieder (66, 61) aufweist.

2. Aufbau nach Anspruch 1, **dadurch gekennzeichnet, dass** die Hüllvorrichtung (12) benachbart dem Anschlussbereich (10) eine beispielsweise in die Hüllvorrichtung (12) integrierte Schließwand (35) aufweist.

3. Aufbau nach Anspruch 2, **dadurch gekennzeichnet, dass** die Schließwand (35) der Hüllvorrichtung (12) mit einer örtlichen Querschnittserweiterung (36) als Lageraufnahme für das Antriebsaggregat (6) versehen ist.

4. Aufbau nach Anspruch 3, **dadurch gekennzeichnet, dass** die Querschnittserweiterung (36) sich über einen wesentlichen Teil der Höhe der Schließwand (35) erstreckt und bspw. eine auf den Kopf gestellte V-Form besitzt.

5. Aufbau nach Anspruch 1, **dadurch gekennzeichnet, dass** die Hüllvorrichtung (12) - von oben gesehen - sich zwischen dem Anschlussbereich (10) und dem hinteren Endbereich von einer ersten größten Breite (Bg) aus zu einer zweiten reduzierten Breite (Br) hin verjüngt.

6. Aufbau nach Anspruch 5, **dadurch gekennzeichnet, dass** die zweite reduzierte Breite (Br) in einem mittleren Abschnitt (Ab) der Hüllvorrichtung (12) zwischen dem Anschlussbereich (10) und dem Endbereich (11) beginnt, welche zweite reduzierte Breite (Br) etwa konstant zum hinteren Endbereich (11) hin verläuft.

7. Aufbau nach Anspruch 1, **dadurch gekennzeichnet, dass** die Hüllvorrichtung (12) durch ein Oberteil (38) und ein Unterteil (39) gebildet wird.

8. Aufbau nach Anspruch 7, **dadurch gekennzeichnet, dass** zumindest das Oberteil (38) seitliche aufrechte Hüllabschnitte (40) und einen horizontalen Hüllabschnitt (41) aufweist, wobei erste freie Enden (44) des Oberteils (38) mit zweite freien Enden (45) des Unterteils (39) zusammenwirken.

9. Aufbau nach Anspruch 8, **dadurch gekennzeichnet, dass** die ersten freien Enden (44) und zweiten freien Enden (45) mit Stufen (46 und 47) versehen sind, die abgesetzte Verbindungen bilden.

10. Aufbau nach Anspruch 9, **dadurch gekennzeichnet, dass** das Oberteil (39) und das Unterteil (39) im Bereich der abgesetzten Verbindungen unter Vermittlung von Schrauben (48) miteinander verbunden sind.

11. Aufbau nach Anspruch 1, **dadurch gekennzeichnet, dass** die Hüllvorrichtung (12) und die Fahrgastraumstruktur (2) im Anschlussbereich (10) unter Vermittlung von mehreren bspw. in Fahrzeuglängsrichtung (A-A) ausgerichteten Schrauben (4) miteinander verbunden sind.

12. Aufbau nach Anspruch 11, **dadurch gekennzeichnet, dass** zumindest ein Teil der Schrauben (4) benachbart eines äußeren Umfangs (54) eines Querträgers (24) der Trägervorrichtung (24) der Hüllvorrichtung (12) vorgesehen sind.

13. Aufbau nach Anspruch 12, **dadurch gekennzeichnet, dass** der Querträger (24) erste und zweite konsolenartige Laschen (55 und 56) zur Aufnahme der Schrauben (4) aufweist.

14. Aufbau nach Anspruch 1, **dadurch gekennzeichnet, dass** - von oben gesehen - eine Durchgangsöffnung (16) der Hüllvorrichtung (12) so bemessen ist, dass Gehäuse des Antriebsaggregats (6) sichtbar und zugänglich sind.

15. Aufbau nach den Ansprüchen 1 und 14, **dadurch gekennzeichnet, dass** die Durchgangsöffnung (16) die Form eines gleichschenkeligen Dreiecks aufweist, dessen Spitze (57) benachbart dem hinteren Endbereich (11) liegt, wobei von der Spitze (57) weggeführte Schenkel (58) des Dreiecks einen nach außen gerichteten bogenförmigen Verlauf aufweisen.

16. Aufbau nach Anspruch 1, **dadurch gekennzeichnet, dass** benachbart dem hinteren Endbereich (11) z.B. an den Längsseiten der Hüllvorrichtung (12) Einformungen (60,61) zur Aufnahme von Lagern (64,65) des Antriebsaggregats (6) vorgesehen sind.

17. Aufbau nach Anspruch 16, **dadurch gekennzeichnet, dass** die Einformungen (60,61) etwa horizontal ausgebildete Stützkonsolen (62,63) aufweisen, die zur Auflage und Befestigung der Lager (64,65) dienen.

## Claims

1. A body (1) for motor vehicles, especially passenger vehicles, with a passenger-compartment structure (2) made of high-strength plastics, and at least one supporting structure (3) adjacent thereto and made of high-strength plastics for receiving a drive assembly (6) and wheel suspension members, wherein the supporting structure (3), which has a region (10) for connection to the passenger-compartment structure (2) and a rear end region (11), is connected to the passenger-compartment structure (2) by holding members (4), wherein the supporting structure (3) is formed by an approximately tubular, three-dimensional covering device (12) extending in the vehicle longitudinal direction (A-A) and surrounding the drive assembly (6) substantially on all sides, wherein the tubular covering device (12) has a stiffening support device (24), a plurality of lateral, upper and lower passage openings (14 to 23) allowing access to the drive assembly (6), and bearing mounts (36, 62, 63, 71, 77) integrated into the covering device (12) and provided for the drive assembly (6) and the wheel suspension members (66, 61).

2. A body according to claim 1, **characterised in that** the covering device (12) has, adjacent to the connecting region (10), a closing wall (35) which e.g. is integrated into the covering device (12).

3. A body according to claim 2, **characterised in that** the closing wall (35) of the covering device (12) is provided with a local cross-sectional enlargement (36) acting as a bearing mount for the drive assembly (6).

4. A body according to claim 3, **characterised in that** the cross-sectional enlargement (36) extends over a substantial part of the height of the closing wall (35) and e.g. is in the shape of an inverted V.

5. A body according to claim 1, **characterised in that** the covering device (12) - when seen from above - tapers from a first greatest width (Bg) to a second reduced width (Br) between the connecting region (10) and the rear end region.

6. A body according to claim 5, **characterised in that** the second reduced width (Br) begins in a middle portion (Ab) of the covering device (12) between the connecting region (10) and the end region (11) and extends approximately constantly towards the rear end region (11).

7. A body according to claim 1, **characterised in that** the covering device (12) is formed by an upper part (38) and a lower part (39).

8. A body according to claim 7, **characterised in that** at least the upper part (38) has lateral upright covering portions (40) and a horizontal covering portion (41), wherein first free ends (44) of the upper part (38) co-operate with second free ends (45) of the lower part (39).

9. A body according to claim 8, **characterised in that** the first free ends (44) and the second free ends (45) are provided with steps (46 and 47) which form shouldered connections.

10. A body according to claim 9, **characterised in that** the upper part (39) and the lower part (39) are connected to one another in the region of the shouldered connections by means of screws (48).

11. A body according to claim 1, **characterised in that** the covering device (12) and the passenger-compartment structure (2) are connected to one another in the connecting region (10) by means of a plurality of screws (4) extending e.g. in the vehicle longitudinal direction (A-A).

12. A body according to claim 11, **characterised in that** at least some of the screws (4) are provided adjacent to an outer circumference (54) of a transverse member (24) of the support device (24) of the covering device (12).

13. A body according to claim 12, **characterised in that** the transverse member (24) has first and second bracket-type plates (55 and 56) for receiving the screws (4).

14. A body according to claim 1, **characterised in that** - when seen from above - a passage opening (16) in the covering device (12) is dimensioned so that housings of the drive assembly (6) are visible and accessible.

15. A body according to claims 1 and 14, **characterised in that** the passage opening (16) is in the shape of an equilateral triangle, the point (57) of which lies adjacent to the rear end region (11), wherein sides (58) of the triangle extending away from the point (57) have an outwardly curved shape.

16. A body according to claim 1, **characterised in that** mouldings (60, 61) intended to receive bearings (64, 65) of the drive assembly (6) are provided adjacent to the rear end region (11), e.g. on the longitudinal sides of the covering device (12).

17. A body according to claim 16, **characterised in that** the mouldings (60, 61) have approximately horizontally formed supporting brackets (62, 63) which serve to support and fasten the bearings (64, 65).

## Revendications

1. Carrosserie (1) pour véhicule automobile, en particulier pour voiture de tourisme, comportant une structure d'habitacle (2) en une matière plastique très résistante et au moins une structure portante (3) se raccordant à celle-ci en une matière plastique très résistante, destinée à recevoir un groupe moteur (6) ainsi que des éléments de suspension des roues, une zone de raccordement (10) étant reliée à la structure d'habitacle (2) et une structure portante (3), présentant une zone terminale arrière (11), étant reliée à la structure d'habitacle (2) par l'intermédiaire d'éléments de retenue (4), la structure portante (3) étant formée par un dispositif d'enveloppe (12) spatial, à peu près de forme tubulaire, s'étendant dans la direction longitudinale A-A du véhicule, lequel dispositif d'enveloppe entoure le groupe moteur (6) sensiblement de tous côtés, le dispositif d'enveloppe (12) de type tubulaire comportant un dispositif de support (24) de rigidification, plusieurs ouvertures de passage (14 à 23) latérales, ainsi que supérieures et inférieures, permettant l'accès au groupe moteur (6), ainsi que des logements d'appui (36, 62, 63, 71, 77), intégrés au dispositif d'enveloppe (12), pour le groupe moteur (6) et les éléments de suspension des roues (66, 61).

2. Carrosserie selon la revendication 1, **caractérisée en ce que** le dispositif d'enveloppe (12) comporte, au voisinage de la zone de raccordement (10), une paroi de fermeture (35) intégrée par exemple au dispositif d'enveloppe (12).

3. Carrosserie selon la revendication 2, **caractérisée en ce que** la paroi de fermeture (35) du dispositif d'enveloppe (12) est pourvue d'un élargissement (36) local de sa section transversale servant de logement d'appui au groupe moteur (6).

4. Carrosserie selon la revendication 3, **caractérisée en ce que** l'élargissement (36) de la section transversale s'étend sur une partie essentielle de la hauteur de la paroi de fermeture (35) et présente par exemple une forme en V tête en bas.

5. Carrosserie selon la revendication 1, **caractérisée en ce que** le dispositif d'enveloppe (12) - vu de dessus - se rétrécit entre la zone de raccordement (10) et la zone terminale arrière, d'une première largeur maximale Bg à une deuxième largeur réduite Br.

6. Carrosserie selon la revendication 5, **caractérisée en ce que** la deuxième largeur réduite Br commence dans un segment central Ab du dispositif d'enveloppe (12), entre la zone de raccordement (10) et la zone terminale (11), et cette deuxième largeur réduite Br s'étend à peu près constante vers la zone terminale arrière (1).

7. Carrosserie selon la revendication 1, **caractérisée en ce que** le dispositif d'enveloppe (12) est formé par une partie supérieure (38) et une partie inférieure (39).

8. Carrosserie selon la revendication 7, **caractérisée en ce qu'**au moins la partie supérieure (38) présente des segments d'enveloppe (40) latéraux et verticaux ainsi qu'un segment d'enveloppe horizontal (41), les premières extrémités libres (44) de la partie supérieure (38) coopérant avec des deuxièmes extrémités libres (45) de la partie inférieure (39).

9. Carrosserie selon la revendication 7, **caractérisée en ce que** les premières extrémités libres (44) et les deuxièmes extrémités libres (45) sont pourvues de gradins (46 et 47) qui forment des liaisons étagées.

10. Carrosserie selon la revendication 9, **caractérisée en ce que** la partie supérieure (38) et la partie inférieure (39) sont reliées l'une à l'autre dans la zone des liaisons étagées, par l'intermédiaire de vis (48).

11. Carrosserie selon la revendication 1, **caractérisée en ce que** le dispositif d'enveloppe (12) et la structure d'habitacle (2) sont reliés l'un à l'autre dans la zone de raccordement (10), par l'intermédiaire de plusieurs vis (4) orientées par exemple dans la direction longitudinale A-A du véhicule.

12. Carrosserie selon la revendication 11, **caractérisée en ce qu'**au moins une partie des vis (4) est prévue à proximité d'un pourtour extérieur (54) d'une traverse (24) du dispositif de support (24) du dispositif d'enveloppe (12).

13. Carrosserie selon la revendication 12, **caractérisée en ce que** la traverse (24) comporte des premières et des deuxièmes pattes (55 et 56) de type console pour recevoir les vis (4).

14. Carrosserie selon la revendication 1, **caractérisée en ce que** - vue de dessus - une ouverture de passage (16) du dispositif d'enveloppe (12) a des dimensions telles que des carters du groupe moteur (6) soient visibles et accessibles.

15. Carrosserie selon les revendications 1 et 14, **caractérisée en ce que** l'ouverture de passage (16) présente la forme d'un triangle isocèle dont le sommet (57) se situe au voisinage de la zone terminale arrière (11), des côtés (58) du triangle, partant du sommet (57), présentant une allure en arc dirigée vers l'extérieur.

16. Carrosserie selon la revendication 1, **caractérisée en ce qu'**au voisinage de la zone terminale arrière (11), par exemple sur les côtés longitudinaux du dispositif d'enveloppe (12), sont prévus des renfoncements (60, 61) destinés à recevoir des paliers (64, 66) du groupe moteur (6).

17. Carrosserie selon la revendication 16, **caractérisée en ce que** les renfoncements (60, 61) comportent des consoles d'appui (62, 63), réalisées à peu près horizontalement, qui servent à supporter et à fixer les paliers (64, 65).
